# EUROPÄISCHE PATENTANMELDUNG

(11) **EP 1 316 898 A2**
(43) Veröffentlichungstag der Anmeldung: **04.06.2003**
(21) Anmeldenummer: 02024604.7
(22) Anmeldetag: 04.11.2002
(51) Int. Cl.: G06F 17/30

(54) **Einfache und sichere Methode zum Sperren von Datensätzen aus CGI-Scripten heraus**

(30) Priorität: 28.11.2001 DE 10158396; 26.04.2002 DE 10218829
(71) Anmelder: SIEMENS AKTIENGESELLSCHAFT, 80333 München (DE)
(72) Erfinder: Heptner, Thomas, 81371 München (DE)

(57) **Zusammenfassung**

Die Erfindung betrifft ein Datenkommunikationsverfahren, eine Rechner-Einrichtung (2) zur Verwendung in einem Datenkommunikationssystem (1), sowie ein Datenkommunikationssystem (1), welches mindestens eine zentrale Rechner-Einrichtung (2) aufweist, mindestens eine Speichereinrichtung (5), auf welcher eine Vielzahl von Datenelementen gespeichert ist, mehrere Clients (3a, 3b), von welchen aus auf die Datenelemente zugegriffen werden kann, und eine Zeitdaten-Bereitstelleinrichtung (13), welche die Rechner-Zeit (T) oder die Client-Zeit betreffende Daten bereitstellt, **dadurch gekennzeichnet**, dass jedem Datenelement ein Datenfeld zugeordnet ist, in das auf Basis der die Rechner- oder Client-Zeit (T) betreffenden Daten ermittelte Kommunikationssteuerungsdaten eingetragen werden, die eine Sperr-Ablauf-Zeit (T_{ablauf}) angeben oder auf Basis derer eine Sperr-Ablauf-Zeit ermittelt werden kann, zu der nach einem von einem ersten Client (3a) aus ausgelösten Zugriff auf ein bestimmtes Datenelement dieses Datenelement für einen von einem weiteren Client (3b) aus ausgelösten Zugriff wieder freigegeben wird.

## Beschreibung

Die Erfindung betrifft ein Datenkommunikationssystem gemäß dem Oberbegriff des Anspruchs 1, sowie eine Rechner-Einrichtung zur Verwendung in einem derartigen Datenkommunikationssystem.

Des weiteren betrifft die Erfindung ein Datenkommunikationsverfahren gemäß Oberbegriff des Anspruchs 16.

Die Datenübertragung über das Internet nimmt weiter an Bedeutung zu. Hierbei kommuniziert z.B. ein zentraler Rechner bzw. zentraler Computer (Serverrechner) mit z.B. einem entfernt hiervon angeordneten Client, z.B. einem - stationären oder tragbaren - Computer, einem Mobiltelefon, etc.

Die Kommunikation erfolgt unter Verwendung von sog. Internetprotokollen, insbesondere dem Transmission Control Protocol (TCP) und dem Internet Protocol (IP), kurz TCP/IP.

Hierzu ist z.B. auf dem Client eine (Browser-) Software geladen, die das TCP/IP Protokoll verstehen und auswerten kann (Socket oder TCP/IP Stack).

Der am schnellsten wachsende Dienst des Internets beruht auf dem Hypertext Transfer Protocol (HTTP) und wird World Wide Web (WWW) genannt. Über das World Wide Web können einzelne Dokumente, sog. Websites oder Web-Pages, übertragen werden.

HTTP ist ein Client-Server-Protokoll. Vor der Herstellung einer Internetverbindung zwischen dem Client und dem Serverrechner kann der Client bei bestimmten Anwendungen z.B. zunächst mit einem weiteren, ihm zugeordneten Web-Host eines Internet-Serviceproviders (ISP) verbunden werden. Auf diesem läuft eine der Clientsoftware (d.h. dem Browser) auf dem Client entsprechende Serversoftware.

Dann wird am Client die zu der jeweils gewünschten Website auf dem Serverrechner gehörende Web-Adresse eingegeben, zu der dann von dem dem Client zugeordneten ISP-Web-Host aus eine Internetverbindung aufgebaut wird.

Die Web-Adresse wird in Form eines der jeweiligen Website zugeordneten URL-Adresse (URL = Universal Resource Locator) angegeben. Diese ist aus mehreren Teilen aufgebaut. Der erste Teil bezeichnet das Internet-Protokoll (Zeichenfolge "http://").

Der nächste Teil der URL-Adresse kennzeichnet den jeweiligen Serverrechner, auf dem die Website gespeichert ist (sog. Domain-Name), und der darauffolgende Teil - falls vorhanden - den Pfad zu einem lokalen Verzeichnis, in dem die Website auf dem Serverrechner gespeichert ist. Der letzte URL-Adressteil kann dann den exakten Dateinamen der Website bezeichnen, die dann vom Serverrechner aus - unter Zwischenschaltung des ISP-Web-Hosts - über das Internet an den Client übertragen wird.

Statt auf einfache Dateien zuzugreifen, können über das Internet z.B. auch in einem entsprechenden Verzeichnis (z.B. "cgi-bin") des Serverrechners abgelegte Programme gestartet werden. Bei derartigen Programmen kann es sich z.B. um CGI-Programme handeln (CGI = Common Gateway Interface). Der letzte Teil der URL kennzeichnet dann die jeweilige Programm-Datei (z.B. "action.cgi").

Mit Hilfe eines CGI-Programms ist es z.B. möglich, zwischen dem Client und einer auf einer dem Serverrechner zugeordneten Speichereinrichtung abgespeicherten Datenbank Informationen auszutauschen (bzw. allgemein beliebige, z.B. auf entsprechenden Datenträgern, beispielsweise einer Festplatte, gespeicherte Daten z.B. abzufragen, und/oder zu ändern).

Nach dem Start des CGI-Programms nimmt dieses Verbindung mit der Datenbank auf, und fragt die entsprechenden Daten ab. Diese können in vielen verschiedenen Formaten vorliegen (z.B. Text-, Grafik-, Ton- und Videodaten, URLs, etc.).

Die Daten werden vom CGI-Programm entsprechend formatiert, beispielsweise in das HTML-Format oder ein DHTML-Format gebracht, oder beliebige andere HTML-Derivate (HTML = Hypertext Markup Language; DHTML = Dynamic Hypertext Markup Language), und dann z.B. in Form einer HTML- bzw. DHTML-Website über das Internet an den Client übertragen.

Die jeweilige Website wird dann vom Browser am Bildschirm des Clients angezeigt.

Im Stand der Technik wird zur Steuerung der Kommunikation zwischen verschiedenen Clients, und dem Serverrechner (insbesondere zur Concurrency-Steuerung (d.h. zur Koordination sich überschneidender Zugriffe auf ein- und dieselben Daten)) beim Einloggen eines bestimmten Clients auf dem Serverrechner eine sog. Sitzung (Session) eröffnet, der eine bestimmte Kennung (Sitzungs- bzw. Session-ID) zugewiesen wird.

Zur Verwaltung verschiedener (z.B. von unterschiedlichen Clients aus angestoßenen) Sitzungen werden sog. Sitzungsdaten verwendet, die auf der Speichereinrichtung des Serverrechners abgespeichert sind, und von einem Sitzungs-Verwaltungs- bzw. Session-Management-Tool des Serverrechners aktualisiert werden.

Wird z.B. von einem bestimmten Client aus ein Schreibvorgang auf auf der o.g. Datenbank gespeicherte Daten (oder beliebige andere Daten) ausgelöst, werden diese Daten durch entsprechenden Vermerk in den Sitzungsdaten für andere Clients (genauer: für andere Sessions mit anderer Sitzungs- bzw.
Session-ID) gesperrt (Lock).

Nach Beenden des Schreibvorgangs, oder nach dem Logout des jeweiligen Clients (d.h. dem ordnungsgemäßen Schließen der Sitzung) werden die Daten vom Sitzungs-Verwaltungs- bzw. Session-Management-Tool - wiederum durch entsprechenden Vermerk in den Sitzungsdaten - wieder freigegeben (Unlock).

Verläßt der Nutzer des jeweiligen Clients die jeweilige Anwendung, bevor der jeweilige Schreibvorgang beendet ist - und ohne zuvor einen ordnungsgemäßen Logout durchzuführen - bleiben die entsprechenden Daten gesperrt.

Um zu verhindern, dass diese Daten auf ewige Zeit blockiert bleiben, kontrolliert das Sitzungs-Verwaltungs- bzw. Session-Management-Tool in regelmäßgen Abständen die bei den verschiedenen Sitzungen stattfindenden Aktivitäten. Findet bei einer bestimmten Sitzung über eine vorbestimmte Zeitdauer keine Aktivität statt, wird die Sitzung beendet, und die entsprechenden Daten freigegeben.

Die im Stand der Technik bekannte Kommunikationssteuerung ist relativ aufwendig. Außerdem kann, wenn ein Nutzer eine Anwendung ohne ordnungsgemäßen Logout verlässt, der Zugriff auf bestimmte Daten relativ lange blockiert sein.

Die Erfindung hat zur Aufgabe, ein neuartiges Datenkommunikationssystem, eine neuartige Rechner-Einrichtung zur Verwendung in einem derartigen Datenkommunikationssystem, sowie ein neuartiges Datenkommunikationsverfahren zur Verfügung zu stellen.

Sie erreicht dieses und weitere Ziele durch die Gegenstände der Ansprüche 1, 15 und 16.

Vorteilhafte Weiterbildungen der Erfindung sind in den Unteransprüchen angegeben.

Gemäß einem Grundgedanken der Erfindung wird ein Datenkommunikationssystem bereitgestellt, welches mindestens eine zentrale Rechner-Einrichtung aufweist, mindestens eine Speichereinrichtung, auf welcher eine Vielzahl von Datenelementen gespeichert ist, mehrere Clients, von welchen aus auf die Datenelemente zugegriffen werden kann, und eine Zeitdaten-Bereitstelleinrichtung, welche die Rechner-Zeit oder die Client-Zeit betreffende Daten bereitstellt, wobei jedem Datenelement ein Datenfeld (z.B. eine LockID) zugeordnet ist, in das auf Basis der die Rechner- oder die Client-Zeit betreffenden Daten ermittelte Kommunikationssteuerungsdaten eingetragen werden, die eine Sperr-Ablauf-Zeit angeben oder auf Basis derer eine Sperr-Ablauf-Zeit ermittelt werden kann, zu der nach einem von einem ersten Client aus ausgelösten Zugriff auf ein bestimmtes Datenelement dieses Datenelement für einen von einem weiteren Client aus ausgelösten Zugriff wieder freigegeben wird.

Besonders vorteilhaft ist eine Ausgestaltung, bei welcher die in das Datenfeld eingetragenen Kommunikationssteuerungsdaten bzw. die LockID im Datenkommunikationssystem eineindeutig sind, um jede Art von Fehlfunktion zu vermeiden.

Anmerkung: In der vorliegenden Anmeldung wird der Begriff "Datenelement" dahingehend verstanden, dass er - neben einem separaten Datenelement - auch einen (aus mehreren separaten Datenelementen bestehenden) Datensatz umfaßt, sowie jede beliebige Datenansammlung, der bzw. die als Einheit gegen konkurrierende Zugriffe gesperrt werden soll.
Besonders vorteilhaft ist eine Ausgestaltung, bei welcher bei einem vom ersten Client aus ausgelösten Lese-/Schreibzugriff auf das Datenelement zunächst ein Lese-Zugriff auf das Datenelement durchgeführt wird, und daraufhin ein Schreib-Zugriff, wobei der Schreib-Zugriff erst durchgeführt wird, nachdem die Kommunikationssteuerungs-Daten bzw. die LockID auf Identität hin überprüft wurden.

Dadurch kann auf relativ einfache Weise eine Concurrency-Steuerung erreicht werden, so dass auf die relativ aufwändigen, herkömmlichen Sitzungs-Verwaltungs- bzw. Session-Management-Tools verzichtet werden kann.

Im folgenden wird die Erfindung anhand mehrerer Ausführungsbeispiele und der beigefügten Zeichnung näher erläutert. In der Zeichnung zeigt:
Figur 1 eine schematische Darstellung eines Datenkommunikationssystems gemäß einem Ausführungsbeispiel der Erfindung; und
Figur 2 eine schematische Darstellung des Ablaufs der Datenkommunikation bei dem in Figur 1 gezeigten Datenkommunikationssystem;
Figur 3 eine schematische Darstellung des logischen Ablaufs eines Lese- und Schreibzugriffs auf ein Datenelement in dem in Figur 1 gezeigten Datenkommunikationssystem; und
Figur 4 eine schematische Darstellung des Ablaufs und der Ausgestaltung eines Verfahrens zur Vergabe eineindeutiger LockIDs in dem in Figur 1 gezeigten Datenkommunikationssystem, oder in einem Rechnerverbund mit mehreren zentralen Rechnern.

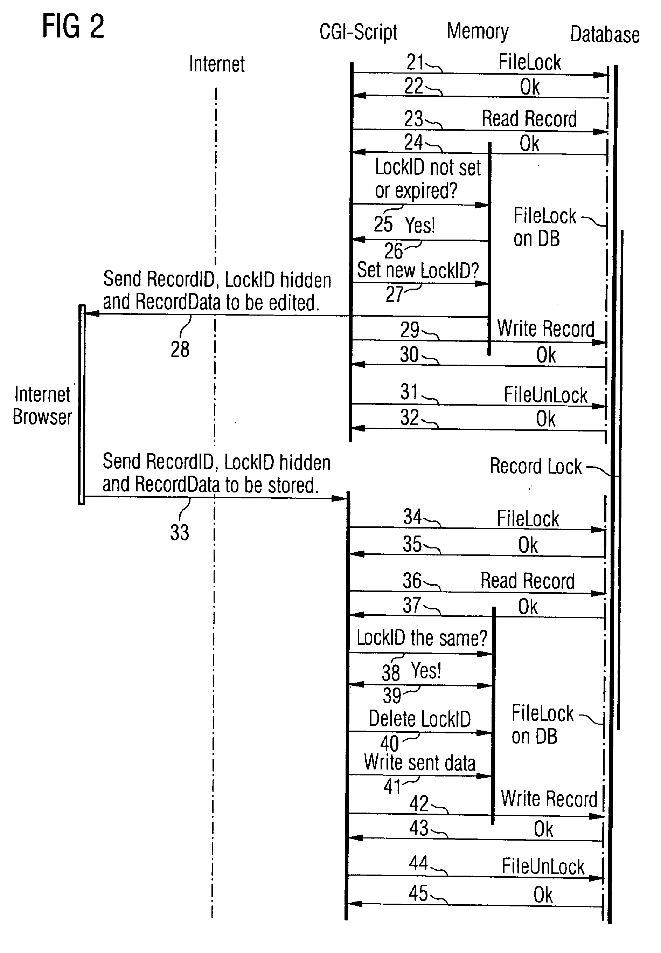

In Figur 2 ist der Fall eines fehlerlosen Datenelement-Zugriffs gezeigt.

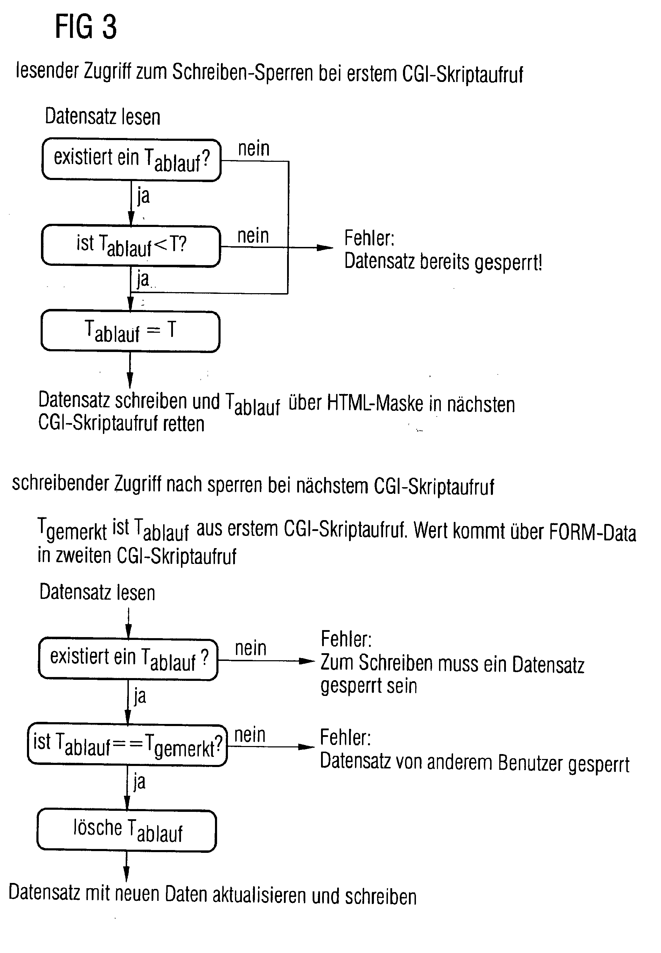

Figur 3 zeigt Sonder- bzw. Fehlerfälle, die bei einem Zugriff auf ein Datenelement beim hier beschriebenen Datenkommunikationsverfahren auftreten können.

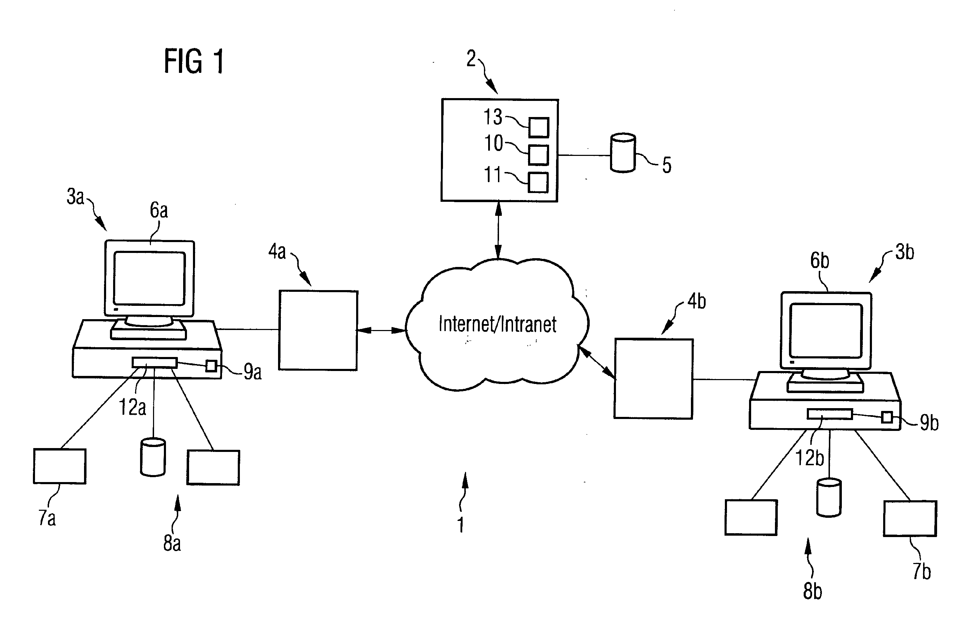

In Figur 1 ist eine schematische Darstellung eines Datenkommunikationssystems 1 gemäß einem Ausführungsbeispiel der Erfindung gezeigt.

Das Datenkommunikationssystem 1 weist einen zentralen Rechner 2 (Serverrechner) auf, der an das Internet (bzw. alternativ an ein Intranet) angeschlossen ist.

Bei einem alternativen, hier nicht gezeigten Ausführungsbeispiel werden statt des einzelnen, zentralen Rechners 2 mehrere zentrale und/oder dezentrale Rechner verwendet, die gemeinsam die gleiche Funktionalität wie der zentrale Rechner 2 erfüllen.

Ein erster Client 3a kann über einen Rechner 4a eines ISPs (ISP = Internet Service Provider) - oder bei einem alternativen Ausführungsbeispiel direkt über eine Standleitung - an das Internet angeschlossen werden.

Auf entsprechende Weise ist ein zweiter Client 3b (sowie eine Vielzahl weiterer Clients) über einen weiteren ISP-Rechner 4b (bzw. alternativ über den o.g. ISP-Rechner 4a, oder über weitere, nicht dargestellte ISP-Rechner) - oder alternativ direkt - mit dem Internet verbunden.

Bei den Clients 3a, 3b kann es sich z.B. um - stationäre oder tragbare - Computer (z.B. PCs, Laptops oder PDAs (PDA = Personal Digital Assistant)) handeln, oder z.B. um Telefone, insbesondere Mobiltelefone.

Der zentrale Rechner 2 weist eine oder mehrere Speichereinrichtungen 5 auf (bzw. ist an eine oder mehrere externe Speichereinrichtungen angeschlossen). Bei der Speichereinrichtung 5 kann es z.B. sich um einen magnetischen oder optischen Speicher handeln, beispielsweise um eine oder mehrere Festplatten, auf welcher bzw. welchen entsprechende Daten gespeichert sind - z.B. eine oder mehrere Programm-Dateien, und sonstige Nutzdaten, auf die von den Clients 3a, 3b zugegriffen werden kann. Die sonstigen Nutzdaten können in vielen verschiedenen Formaten vorliegen (z.B. Text-, Grafik-, Tonund Videodaten, etc.).

Die Daten können z.B. in Form von strukturierten Files abgespeichert sein, die jeweils eine Vielzahl von Datenelementen (sog. Datensätze) aufweisen. Die Abspeicherung kann z.B. unter Verwendung einer oder mehrerer Datenbanken erfolgen, oder auf beliebige andere Weise.

Der zentrale Rechner 2 enthält eine oder mehrere Mikroprozessor-Einrichtungen 10, der bzw. die mit einer oder mehreren weiteren Speichereinrichtungen 11 verbunden ist bzw. sind. Bei der Speichereinrichtung 11 kann es sich im Prinzip um einen beliebigen elektrischen, magnetischen oder optischen Speicher handeln, insbesondere um eine Hauptspeicher-Einrichtung der Mikroprozessor-Einrichtung 10.

Des weiteren weist der zentrale Rechner 2 eine Zeitzähleinrichtung 13, z.B. eine Uhr auf. Diese zählt die seit einem vorbestimmten Referenzeitpunkt vergangene Zeit T, z.B. die seit dem 1. Januar 1970 vergangenen Sekunden.

Wie in Figur 1 weiter gezeigt ist, weist jeder Client 3a, 3b eine Ausgabeeinrichtung 6a, 6b, z.B. einen Bildschirm oder ein Display auf, sowie eine Eingabeeinrichtung 7a, 7b, beispielsweise eine Maus und/oder eine Tastatur.

Des weiteren sind bei jedem Client 3a, 3b eine oder mehrere Speichereinrichtungen 8a, 8b vorgesehen, z.B. eine Festplatte, ein CD-ROM- und/oder ein Diskettenlaufwerk, etc.

Jeder Client 3a, 3b enthält eine oder mehrere Mikroprozessor-Einrichtungen 12a, 12b, der bzw. die mit einer oder mehreren weiteren Speichereinrichtungen 9a, 9b (z.B. einer Mikroprozessor-Hauptspeicher-Einrichtung) verbunden ist bzw. sind.

Dem zentralen Rechner 2, bzw. einer in dessen Speichereinrichtung 5 gespeicherter Programm-Datei ist eine bestimmte URL-Adresse zugeordnet. Diese ist aus mehreren Teilen aufgebaut.

Der erste Teil bezeichnet das Internet-Protokoll (Zeichenfolge "http:"). Darauf folgt ein Trennzeichen, das kennzeichnet, dass ein Servername folgt (Zeichenfolge "//").

Der nächste Teil der URL-Adresse kennzeichnet den zentralen Rechner, auf dem die Programm-Datei gespeichert ist (sog. Domain-Name (z.B. "www.heptner.com"), und der darauffolgende Teil den Pfad zu einem lokalen Verzeichnis, in dem die o.g. Programm-Datei (sowie optional weitere Programm-Dateien) auf dem zentralen Rechner gespeichert ist (z.B. "cgi-bin"). Der letzte URL-Adressteil kennzeichnet den Namen der jeweiligen Programm-Datei (z.B. "action.cgi").

Die Programm-Datei kann z.B. ein CGI-Programm enthalten (CGI = Common Gateway Interface). Mit Hilfe des CGI-Programms ist es z.B. möglich, Daten zwischen dem jeweiligen Client 3a, 3b und der auf der Speichereinrichtung 5 des zentralen Rechners 2 abgespeicherten Datenbank auszutauschen.

Um das CGI-Programm zu starten, kann z.B. an der Eingabeinrichtung 7a, 7b des jeweilige Clients 3a, 3b die entsprechende URL-Adresse eingegeben werden. In Reaktion hierauf wird - falls nicht bereits vorab erfolgt - auf an sich bekannte Weise unter Zwischenschaltung des ISP-Rechners 4a, 4b eine Internetverbindung zwischen dem jeweiligen Client 3a, 3b, und dem zentralen Rechner 2 aufgebaut.

Daraufhin wird das in der o.g. Programm-Datei gespeicherte CGI-Programm gestartet.

Nach dem Start des CGI-Programms nimmt dieses Verbindung mit der Datenbank auf.

Im folgenden werden zwei Ausgestaltungen der Erfindung gezeigt, bei der der Mechanismus der "Eindeutigkeit" einer sog. LockID pro zu sperrendes Datenelement im Datenkommunikationssystem 1 auf verschiedene Weise gelöst ist.

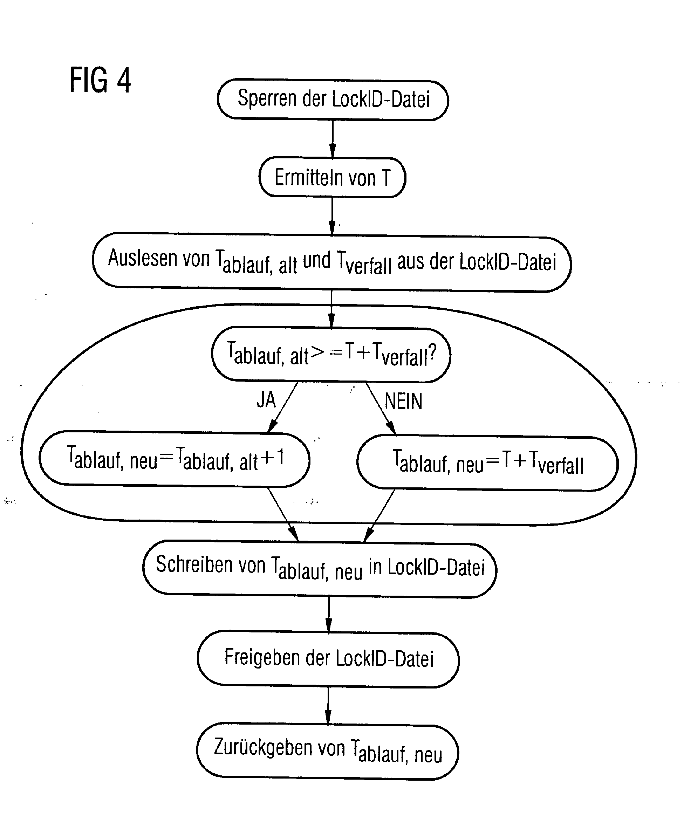

Bei einer ersten, vorteilhaften Ausgestaltung besteht die LockID nur aus einem Element, und zwar einer Sperr-Ablauf-Zeit (T_{ablauf}), die über einen in Figur 4 gezeigten, im Datenkommunikationssystem 1 (oder in einem Rechnerverbund mit mehreren, dem zentralen Rechner 2 in Funktion und Aufbau entsprechenden zentralen Rechnern) zentralen LockID-Vergabemechanismus erzeugt wird.

Vorbedingungen für den Vergabemechanismus sind, dass in der LockID-Datei die zuletzt benutzte LockID (T_{ablauf, alt}), und eine Verfalls-Zeitdauer T_{verfall} abgespeichert ist, und die Datei über einen FileLock-Mechanismus gegen konkurrierenden Zugriff geschützt wird.

Zum Vergabemechanismus selbst noch die folgenden Anmerkungen i) - iv):
i) Je genauer die Auflösung von T, desto geringer ist die Wahrscheinlichkeit dafür, dass gilt: T_{ablauf, alt} >= T + T_{verfall}, und desto geringer ist der Additionseffekt bei T_{ablauf, neu} (T_{ablauf, neu} >> T + T_{verfall} bzw. T_{ablauf, neu} >> T_{ablauf, alt}), also die sich ergebende Verzögerung für einen erneuten Zugriff durch einen anderen Benutzer (T_{ablauf}, ₙₑᵤ - T + T_{verfall}).
ii) Durch das Abspeichern von T_{verfall} in der LockID-Datei kann ohne jede Behinderung systemweit eine Umstellung von T_{verfall} erfolgen. Die Umstellung erfolgt bei Verringerung von T_{verfall} mit einer Verzögerung, die maximal der Differenz zwischen T_{verfall, alt} und T_{verfall, neu} entspricht.
iii) Durch das Abspeichern von T_{ablauf, alt} statt (direkt) von T kann T_{verfall} - da von T unabhängig - jederzeit geändert werden, und trotzdem die Eindeutigkeit der LockIDs gewährleistet bleiben, da T_{ablauf, alt} keinen Bezug zu T enthält, auch wenn T_{verfall} sich ändert.
iv) Alternativ zu dem oben beschriebenen, und in Figur 4 dargestellten Vergabemechanismus kann auch ein Zähler verwendet werden, der bei Anforderung einer LockID zur gleichen Zeit T hochgezählt, und bei neuem T zurückgesetzt wird. Damit wird vermieden, dass es zu der oben beschriebenen Verzögerung kommen kann.

Die Anmelderin behält sich vor, zukünftige Ansprüche allein auf die o.g. (LockID-) Vergabeverfahren zu richten.

Wie in Figur 2 gezeigt ist, wird - nachdem ggf. eines der o.g. Vergabeverfahren durchgeführt wurde - vom CGI-Programm mit Hilfe eines entsprechenden Befehls-Signals 21 (hier: FileLock) der jeweils betroffene File auf der Datenbank (Database) gesperrt.

Das FileLock-Befehls-Signal 21 kann hierzu eine den entsprechenden File kennzeichnende Kennung enthalten (d.h. eine Kennung desjenigen Files, in dem das Datenelement bzw. der Datensatz enthalten ist, auf welches bzw. auf welchen ein Zugriff erfolgen soll).

Wird auf mehrere Datenelemente zugegriffen, die in mehreren, verschiedenen Files enthalten sein können, wird dieses Befehls-Signal und alle weiteren Befehls-Signale mindestens einmal mit mindestens einem Parameter aufgerufen (erfolgreich sind die Lock-Aktionen dann nur, wenn der Lock für jeweils alle Files bzw. Datenelemente möglich sind) bzw. werden mit Hilfe des FileLock-Befehls-Signals 21 sämtliche betroffenen Files gesperrt (das Befehls-Signal 21 enthält dann die Kennungen sämtlicher Files, in denen Datenelemente enthalten sind, auf welche ein Zugriff erfolgen soll).

Beim Locken mehrerer Datenelemente reicht die Erzeugung einer T_{verfall}-Zeit für alle beteiligten Datenelemente aus, die dann in jeder der zugeordneten LockID-Datenfelder gespeichert wird. Über das Internet muss dann entsprechend bei Locken mehrerer Datenelemente nur eine LockID gesandt werden. Dieser Vorgang, wie auch alle weiteren Abläufe werden im folgenden weiterhin anhand des Vorganges des Lockens eines Datenelements geschildert.

Wie in Figur 2 weiter gezeigt ist, und wie weiter unten noch genauer erläutert wird, bleibt der entsprechende File (bzw. die entsprechenden Files) gesperrt (gesperrter Zustand des bzw. der Files (FileLock on Database)), bis der entsprechende File (bzw. die entsprechenden Files) vom CGI-Programm mit Hilfe eines Befehls-Signals 31 (FileUnLock) wieder freigegeben wird (bzw. werden).

Ist der File (bzw. sind die Files) gesperrt worden, wird von der Datenbank eine entsprechende Bestätigungsmeldung bzw. ein Mitteilungs-Signal 22 (OK) an das CGI-Programm gesendet.

Daraufhin wird vom CGI-Programm mit Hilfe eines weiteren Befehls-Signals 23 (hier: Read Record) das oder die jeweils betroffenen Datenelemente aus der Datenbank ausgelesen. Das Read Record - Befehls-Signal 23 enthält eine (oder mehrere) das bzw. die entsprechenden Datenelemente bzw. Records kennzeichnende Kennung bzw. Kennungen (RecordID).

Das bzw. die entsprechende(n) Datenelement(e) wird bzw. werden dann mit Hilfe eines entsprechenden Mitteilungs-Signals 24 (OK) an das CGI-Programm übergeben.

Zur Concurrency-Steuerung (d.h. zur Koordination sich überschneidender Zugriffe auf ein- und dieselben Daten) wird vom CGI-Programm - neben der o.g. RecordID - der RecordID bzw. dem jeweiligen Datenelement zugeordnete Kommunikationssteuerungs-Daten bzw. eine LockID verwendet, die im jeweiligen Datensatz in ein dem jeweiligen Datenelement zugeordnetes Datenfeld eingetragen wird.

Die LockID enthält einen Zeit-Stempel bzw. eine Sperr-Ablauf-Zeit-Kennung T_{ablauf}, mit welchem entsprechend der Darstellung unten die Zeit angegebenen wird, bis zu der der jeweilige Datensatz bzw. das jeweilige Datenelement gesperrt bleiben soll (gesperrter Zustand des jeweiligen Datensatzes (Record-Lock)).

Wie in Figur 2 weiter gezeigt ist, fragt das CGI-Programm nach Beendigung der oben erläuterten Schritte mit Hilfe eines Befehls-Signals 25 (LockID not set or expired) den Zustand der dem jeweiligen Datensatz bzw. Datenelement zugeordneten LockID ab.

(Alternativ wird entsprechend beim gleichzeitigen Zugriff auf mehrere Datenelemente der Zustand sämtlicher diesen zugeordneten LockIDs überprüft.)

Insbesondere wird abgefragt, ob die jeweilige LockID anzeigt, dass das entsprechende Datenelement der entsprechende Datensatz aufgrund des Ablaufs der Sperr-Ablauf-Zeit T_{ablauf} nicht mehr gesperrt ist.

Hierzu wird die durch die Kommunikationssteuerungs-Daten bzw. die LockID angezeigte Sperr-Ablauf-Zeit T_{ablauf} mit der momentanen, von der Zeitzähleinrichtung 13 gemessenen Zeit T verglichen. Ist T_{ablauf} < T, ist der entsprechende Datensatz bzw. das entsprechende Datenelement (wieder) freigegeben, ansonsten (noch) gesperrt.

Dem CGI-Programm wird mit Hilfe eines entsprechenden Mitteilungs-Signals 26 (Yes!) mitgeteilt, falls die LockID anzeigt, dass der entsprechende Datensatz bzw. das entsprechende Datenelement nicht mehr gesperrt ist.

Ansonsten (d.h. falls die LockID anzeigt, dass der entsprechende Datensatz bzw. das entsprechende Datenelement noch gesperrt ist) enthält das o.g. Mitteilungs-Signal 26 eine Fehlermeldung (No!).

(Alternativ enthält beim gleichzeitigen Zugriff auf mehrere Datenelemente bzw. Datensätze das Mitteilungs-Signal 26 eine entsprechende Fehlermeldung (No!), falls von einer einzigen der mehreren, den Datenelementen bzw. Datensätzen zugeordneten LockIDs angezeigt wird, dass der entsprechende Datensatz noch gesperrt ist.)

Daraufhin wird eine (vom CGI-Programm entsprechend formatierte, z.B. ins HTML-Format oder in ein HTML-Derivat-Format gebrachte) Fehlermeldung über das Internet an den jeweiligen Client 3a, 3b übertragen, und dort unter Steuerung eines auf der bzw. einer der Speichereinrichtungen 8a, 8b des jeweiligen Clients 3a, 3b gespeicherten Browser-Softwareprogramms an der jeweiligen Client-Ausgabeeinrichtung 6a, 6b ausgegeben bzw. angezeigt (z.B. die Fehlermeldung: "Zugriff momentan nicht möglich!").

Als nächstes wird vom CGI-Programm mit Hilfe eines dem bereits oben erwähnten Befehls-Signals 31 (hier: FileUnLock) entsprechenden Befehls-Signals der (bzw. die) betroffene(n) File(s) auf der Datenbank wieder freigegeben. Das FileUnLock-Befehlssignal kann hierzu eine den entsprechenden File kennzeichnende Kennung enthalten (bzw. die entsprechenden Files kennzeichnende Kennungen).

Die Bestätigung der Freigabe des (bzw. der) Files erfolgt mit Hilfe eines dem OK-Signal 32 entsprechenden Signals.

Ist dem CGI-Programm, wie vorher erläutert, mit Hilfe des Mitteilungs-Signals 26 (Yes!) mitgeteilt worden, daß die jeweils betroffene LockID anzeigt bzw. die jeweils betroffenen LockIDs anzeigen, daß der entsprechende Datensatz bzw. die entsprechenden Datensätze nicht (mehr) gesperrt ist, wird vom CGI-Programm, wie in Figur 2 gezeigt, ein Befehls-Signal 27 (Set new LockID) ausgegeben.

Mit diesem Befehl-Signal 27 wird veranlasst, dass der (bzw. die) in der o.g. Speichereinrichtung 11 (Memory) gespeicherte(n), vom jeweiligen Zugriff (bzw. von den jeweiligen Zugriffen) betroffene(n) LockID bzw. LockIDs aktualisiert wird (bzw. werden).

In die jeweilige LockID wird als (neuer) Zeit-Stempel bzw. (neue) Sperr-Ablauf-Zeit-Kennung T_{ablauf, neu} die um eine vorgegebene Verfalls-Zeitdauer T_{verfall} erhöhte, aus der Zeitzähleinrichtung 13 augelesene momentane Zeit T eingetragen (d.h. T_{ablauf, neu} = T + T_{verfall}).

Die Verfalls-Zeitdauer T_{verfall} kann z.B. zwischen 5 und 30 Minuten, insbesondere zwischen 10 und 20 Minuten (z.B. 15 Minuten) betragen, und sollte so gewählt sein, dass der jeweilige Nutzer eines Clients 3a, 3b bequem seine Eingaben beenden kann.

Der beschriebene Mechanismus ermöglicht jedoch auch eine längere Bearbeitungszeit des Datenelements durch den jeweiligen Benutzer, und zwar dann, wenn zwischenzeitlich kein anderer Benutzer schreibend auf das Datenelement zugreifen wollte.

Ab dem Zeitpunkt, zu dem die jeweilige LockID aktualisiert wurde, ist das zugeordnete Datenelement bzw. der Datensatz gesperrt (gesperrter Zustand des Datenelements bzw. Datensatzes (Record Lock)).

Das Datenelement bzw. der Datensatz bleibt gesperrt, bis er vom CGI-Programm mit Hilfe eines Befehls-Signals 40 (Delete LockID) wieder freigegeben wird, oder bis die durch die LockID, insbesondere die Sperr-Ablauf-Zeit-Kennung T_{ablauf} angegebene Sperr-Ablauf-Zeit abgelaufen ist (d.h. wenn gilt T_{ablauf} < T, siehe oben) .

Als nächstes wird mit Hilfe eines Signals 28 (Send RecordID, LockID hidden and RecordData to be edited) die LockId (oder die LockIDs), das (oder die) aus der Datenbank ausgelesene(n) Datenelemente, und die das (bzw. die) Datenelement(e) kennzeichnende(n) RecordID(s) über das Internet an den jeweiligen Client 3a, 3b übertragen.

Diese Daten werden vorher vom CGI-Programm entsprechend formatiert, z.B. ins HTML-Format oder in ein HTML-Derivat-Format gebracht.

Die LockID, und die das Datenelement bzw. den Datensatz kennzeichnende Kennung bzw. RecordID werden jeweils so gesendet, dass sie zwar in der entsprechenden Speichereinrichtung 8a, 8b, 9a, 9b des jeweiligen Clients 3a, 3b gespeichert, jedoch vom jeweiligen Browser-Softwareprogramm nicht an der jeweiligen Client-Ausgabeeinrichtung 6a, 6b ausgegeben bzw. angezeigt werden (sog. verstecktes Senden).

Demgegenüber wird (bzw. werden) das (bzw. die) Datenelement(e) bzw. der Datensatz (bzw. die Datensätze) "offen" gesendet, d.h. so, dass das (bzw. die) Datenelement(e) unter Steuerung des Browser-Softwareprogramms an der Ausgabeeinrichtung 6a, 6b des jeweiligen Clients 3a, 3b ausgegeben bzw. angezeigt wird (bzw. werden).

Wie in Figur 2 weiter gezeigt ist, wird daraufhin vom CGI-Programm mit Hilfe eines weiteren Befehls-Signals 29 (hier: Write Record) das jeweilige Datenelement bzw. der jeweilige Record wieder in die Datenbank geschrieben. Das Write Record - Befehls-Signal 29 enthält die das entsprechende Datenelement bzw. Datensatz kennzeichnende Kennung bzw. RecordID.

Daraufhin wird von der Datenbank eine entsprechende Bestätigungsmeldung bzw. ein Mitteilungs-Signal 30 (OK) an das CGI-Programm gesendet.

Als nächstes wird vom CGI-Programm mit Hilfe des bereits oben erwähnten Befehls-Signals 31 (hier: FileUnLock) der (bzw. die) jeweils betroffene(n) File(s) auf der Datenbank (Database) wieder freigegeben. Das FileUnLock-Befehls-Signal 31 kann eine den entsprechenden File kennzeichnende Kennung enthalten (bzw. mehrere, die entsprechenden Files kennzeichnende Kennungen).

Die Freigabe des (bzw. der) Files wird dann mit Hilfe des bereits oben erwähnten OK-Signals 32 bestätigt.

Das jeweilige wie oben erwähnt vom Browser-Softwareprogramm an der Ausgabeeinrichtung 6a, 6b des jeweiligen Clients 3a, 3b ausgegebene bzw. angezeigte Datenelement bzw. der Datensatz kann vom jeweiligen Nutzer des Clients 3a, 3b mit Hilfe entsprechender an der Eingabeeinrichtung 7a, 7b getätigter Eingaben editiert bzw. geändert werden.

Als nächstes wird mit Hilfe eines Signals 33 (Send RecordID, LockID hidden and RecordData to be stored) das jeweilige (ggf. editierte bzw. geänderte) Datenelement bzw. der Datensatz, sowie die jeweils zugehörige LockID, und die zugehörige, das Datenelement bzw. den Datensatz kennzeichnende Kennung bzw. RecordID über das Internet zurück an den zentralen Rechner 2 übertragen.

Die empfangenen Daten werden an das o.g. CGI-Programm, oder alternativ an ein hiervon verschiedenes CGI-Programm übergeben (vorher wird das entsprechende CGI-Programm (ggf. neu) gestartet).

Daraufhin wird, wie in Figur 2 gezeigt ist, vom CGI-Programm mit Hilfe eines Befehls-Signals 34 (hier: FileLock) der zu dem entsprechenden Datenelement bzw. Datenbsatz gehörige File gesperrt (bzw. beim Zugriff auf mehrere, verschiedene Datenelemente ggf. mehrere, verschiedene Files).

Das FileLock-Befehls-Signal 34 enthält eine den entsprechenden File kennzeichnende Kennung. (Wird auf mehrere Datenelemente zugegriffen, die in mehreren, verschiedenen Files enthalten sind, werden alternativ mit Hilfe des FileLock-Befehls-Signals 34 sämtliche betroffenen Files gesperrt (das Befehls-Signal 34 enthält dann die Kennungen sämtlicher Files, in denen Datenelemente enthalten sind, auf welche ein Zugriff erfolgen soll).)

Der (bzw. die) entsprechende(n) File(s) bleibt (bleiben) gesperrt (gesperrter File-Zustand (FileLock on Database)), bis der (bzw. die) entsprechenden File(s) vom CGI-Programm mit Hilfe eines Befehls-Signals 44 (FileUnLock) wieder freigegeben wird (werden).

Ist der (bzw. sind die) File(s) gesperrt worden, wird von der Datenbank eine entsprechende Bestätigungsmeldung bzw. ein Mitteilungs-Signal 35 (OK) an das CGI-Programm gesendet.

Daraufhin wird vom CGI-Programm mit Hilfe eines weiteren Befehls-Signals 36 (hier: Read Record) das oder die jeweils betroffenen Datenelemente aus der Datenbank ausgelesen. Das Read Record - Befehls-Signal 36 enthält eine (oder mehrere) das bzw. die entsprechenden Datenelemente bzw. Records kennzeichnende Kennung bzw. Kennungen (RecordID).

Das bzw. die entsprechende(n) Datenelement(e) wird bzw. werden dann mit Hilfe eines entsprechenden Mitteilungs-Signals 37 (OK) an das CGI-Programm übergeben.

Wie oben erläutert, enthält jeder (gesperrte) Datensatz bzw. jedes gesperrte Datenelement eine LockID (hier: einen Zeit-Stempel bzw. eine Sperr-Ablauf-Zeit-Kennung T_{ablauf}).

Wie in Figur 2 gezeigt ist, überprüft das CGI-Programm nach Beendigung der oben erläuterten Schritte mit Hilfe eines Befehls-Signals 38 (LockID the same?) den Zustand des (bzw. der) zu den betroffenen Datenelemente(n) zugehörigen LockIDs.

Insbesondere wird überprüft, ob die vom entsprechenden Client 3a, 3b mit Hilfe des o.g. Signals 33 übermittelte(n) LockID(s) identisch zu der LockID des jeweils betroffenen Datensatzes bzw. Datenelements bzw. zu den LockIDs der jeweils betroffenen Datensätze ist bzw. sind.

Falls ja, ist sichergestellt, daß seit dem o.g. Zugriff auf das jeweilige Datenelement bzw. den Datensatz durch den Client 3a, 3b (genauer: seit dem Sperren des entsprechenden Datenelements durch das o.g. Befehls-Signal 27 (Set new LockID)) nicht von einem anderen Client aus auf das entsprechende Datenelement bzw. den entsprechenden Datensatz - auf gültige Weise - zugegriffen worden ist (was möglich gewesen wäre, falls zwischenzeitlich die Datensatz-Sperr-Ablauf-Zeit T_{ablauf} abgelaufen wäre). Dem CGI-Programm wird dies mit Hilfe eines entsprechenden Mitteilungs-Signals 39 (Yes!) mitgeteilt.

Ansonsten (d.h. falls die vom entsprechenden Client 3a, 3b übermittelte LockID) nicht identisch ist, wie die im zentraler Rechner 2a abgespeicherte LockID (d.h. dem entsprechenden Teil des mit dem Befehlssignal 36 gelesenen Datensatzes bzw. Datenelements), enthält das o.g. Mitteilungs-Signal 39 eine Fehlermeldung (No!).

(Alternativ enthält beim gleichzeitigen Zugriff auf mehrere Datenelemente bzw. Datensätze das Mitteilungs-Signal 39 eine entsprechende Fehlermeldung (No!), falls bei einem einzigen der mehreren, den Datenelementen bzw. Datensätzen zugeordneten LockIDs festgestellt wird, daß keine Identität vorliegt.)

Daraufhin wird vom CGI-Programm mit Hilfe eines dem Befehls-Signal 44 (hier: FileUnLock) entsprechenden Befehls-Signals der (bzw. die) jeweils betroffene(n) File(s) auf der Datenbank (Database) wieder freigegeben. Die Bestätigung der Freigabe des (bzw. der) Files erfolgt mit Hilfe eines dem OK-Signal 45 entsprechenden Signals.

Des weiteren wird eine (vom CGI-Programm entsprechend umformatierte, z.B. ins HTML-Format oder in ein HTML-Derivat-Format gebrachte) Fehlermeldung über das Internet an den jeweiligen Client 3a, 3b übertragen, und dort unter Steuerung des Browser-Softwareprogramms an der jeweiligen Client-Ausgabeeinrichtung 6a, 6b ausgegeben bzw. angezeigt (z.B. die Fehlermeldung: "Zugriff momentan nicht möglich!").

Ist stattdessen, wie oben erläutert, dem CGI-Programm mit Hilfe des Mitteilungs-Signals 39 (Yes!) mitgeteilt worden, daß die vom entsprechenden Client 3a, 3b übermittelte(n) LockID(s), genauer: deren (jeweils) zweites Kommunikationssteuerungs-Datenelement identisch ist, wie die im zentraler Rechner 2a abgespeicherte(n) LockID(s) (d.h. der bzw. die entsprechende(n) Teil(e) des bzw. der mit dem Befehlssignal 36 gelesenen Datenelements bzw. Datensatzes bzw. Datensätze), wird vom CGI-Programm mit Hilfe des Befehls-Signal 40 (Delete LockID) die entsprechende(n) LockID(s) gelöscht.

Mit diesem Befehls-Signal 40 wird das (bzw. werden die) entsprechende(n) Datenelement(e) bzw. Datensatz bzw. Datensätze wieder freigegeben.

Wie in Figur 2 gezeigt ist, wird als nächstes mit Hilfe eines Befehls-Signals 41 (Write sent Data) das Einlesen entsprechender, vom jeweiligen Client 3a, 3b empfangener Daten (z.B. des entsprechenden (ggf. geänderten) Datenelements bzw. Datensatzes) in die Speichereinrichtung 11 (Memory) veranlasst.

Wie in Figur 2 weiter gezeigt ist, wird dann vom CGI-Programm mit Hilfe eines Befehls-Signals 42 (hier: Write Record) das o.g. (ggf. geänderte) Datenelement bzw. der (ggf. geänderte) Datensatz in die Datenbank geschrieben. Das Write Record - Befehls-Signal 42 enthält die das entsprechende Datenelement bzw. Datensatz kennzeichnende Kennung bzw. RecordID.

Als nächstes wird von der Datenbank eine entsprechende Bestätigungsmeldung bzw. ein Mitteilungs-Signal 43 (OK) an das CGI-Programm gesendet.

Daraufhin wird vom CGI-Programm mit Hilfe des bereits oben erwähnten Befehls-Signals 44 (hier: FileUnLock) der (bzw. die) jeweils betroffene(n) File(s) auf der Datenbank (Database) wieder freigegeben.

Die Freigabe des (bzw. der) Files wird mit Hilfe des OK-Signals 45 bestätigt.

Bei einer weiteren vorteilhaften Ausgestaltung ist bei der LockID neben einem Sperr-Ablauf-Zeit-Datenfeld ein weiteres Kommunikationssteuerungs-Datenfeld vorgesehen, das die erfolgreichen Lock-Versuche auf das Datenelement bzw. den Datensatz zählt und so auch bei gegebenenfalls gleicher Sperr-Ablauf-Zeit für eine Eindeutigkeit im beschriebenen Kommunikationssystem pro Datenelement bzw. Datensatz sorgt. Da diese Eindeutigkeit ausreicht, kann im Datenkommunikationssystem 1 bei dieser Ausgestaltung auf den in Figur 4 dargestellten zentralen LockID-Vergabemechanismus verzichtet werden.

Zusätzlich zur oben beschriebenen Ausgestaltung mit zentralem Vergabemechanismus der LockIDs muss dann statt nur einer LockID (mit nur einem Datenelement) für alle beteiligten Datenelemente jede komplette LockID mit sämtlichen Kommunikationssteuerungs-Datenfeldern für jeden beteiligten Datensatz bzw. für jedes beteiligte Datenelement über das Internet /Intranet übertragen werden, um beim 2. Aufruf - dem Versuch zum schreibenden Zugriff - mit jeder entsprechenden in der Datenbank gespeicherten LockID auf Identität überprüft werden zu können.

Bei dem beschriebenen Datenkommunikationssystem kann auf relativ einfache Weise eine Concurrency-Steuerung erreicht werden, so dass auf die relativ aufwändigen, herkömmlichen Sitzungs-Verwaltungs- bzw. Session-Management-Software-Programme, und/oder auf die Benutzung herkömmlicher, kostspieliger Datenbank-Software-Programme verzichtet werden kann.

## Patentansprüche

1. Datenkommunikationssystem (1), welches mindestens eine zentrale Rechner-Einrichtung (2) aufweist, mindestens eine Speichereinrichtung (5), auf welcher eine Vielzahl von Datenelementen gespeichert ist, mehrere Clients (3a, 3b), von welchen aus auf die Datenelemente zugegriffen werden kann, und eine Zeitdaten-Bereitstelleinrichtung (13), welche die Rechner-Zeit (T) oder die Client-Zeit betreffende Daten bereitstellt,
**dadurch gekennzeichnet, dass** jedem Datenelement ein Datenfeld zugeordnet ist, in das auf Basis der die Rechner- oder Client-Zeit (T) betreffenden Daten ermittelte Kommunikationssteuerungsdaten eingetragen werden, die eine Sperr-Ablauf-Zeit (T_{ablauf}) angeben oder auf Basis derer eine Sperr-Ablauf-Zeit ermittelt werden kann, zu der nach einem von einem ersten Client (3a) aus ausgelösten Zugriff auf ein bestimmtes Datenelement dieses Datenelement für einen von einem weiteren Client (3b) aus ausgelösten Zugriff wieder freigegeben wird.

2. Datenkommunikationssystem (1) nach Anspruch 1, bei welchem bei einem vom ersten Client (3a) aus ausgelösten Lese/Schreibzugriff auf das Datenelement zunächst ein Lese-Zugriff auf das Datenelement durchgeführt wird, und daraufhin ein Schreib-Zugriff, wobei der Schreib-Zugriff erst durchgeführt wird, nachdem der Kommunikationssteuerungsdaten überprüft wurden.

3. Datenkommunikationssystem (1) nach Anspruch 2, bei welchem der Schreib-Zugriff erst durchgeführt wird, nachdem der Kommunikationssteuerungsdaten auf Identität hin überprüft wurden.

4. Datenkommunikationssystem (1) nach einem der vorhergehenden Ansprüche, bei welchem die die Sperr-Ablauf-Zeit (T_{ablauf}) angebenden Kommunikationssteuerungsdaten dadurch ermittelt werden, dass die Rechner-Zeit (T) oder die Client-Zeit um eine vorbestimmte Zeitdauer (T_{verfall}) erhöht wird.

5. Datenkommunikationssystem (1) nach Anspruch 4, bei welchem die vorbestimmte Zeitdauer (T_{verfall}) zwischen 2 und 30 Minuten, insbesondere zwischen 5 und 20 Minuten bzw. zwischen 10 und 15 Minuten beträgt.

6. Datenkommunikationssystem (1) nach einem der vorhergehenden Ansprüche, bei welchem die Datenelemente in strukturierter Form abgespeichert sind, wobei mehrere Datenelemente jeweils einem File zugeordnet sind.

7. Datenkommunikationssystem (1) nach Anspruch 6, bei welchem vor dem Zugriff auf das Datenelement der entsprechende File gesperrt, und nach dem Zugriff auf das Datenelement wieder freigegeben wird.

8. Datenkommunikationssystem (1) nach einem der vorhergehenden Ansprüche, bei welchem die zentrale Rechner-Einrichtung (2) und die Clients (3a, 3b) über das Internet kommunizieren.

9. Datenkommunikationssystem (1) nach einem der vorhergehenden Ansprüche, bei welchem der Client (3a) ein Computer, insbesondere ein tragbarer oder stationärer Computer ist.

10. Datenkommunikationssystem (1) nach einem der vorhergehenden Ansprüche, bei welchem der Client (3a) ein Telefon, insbesondere ein tragbares oder stationäres Telefon ist.

11. Datenkommunikationssystem (1) nach einem der vorhergehenden Ansprüche, bei welchem der vom ersten Client (3a) aus ausgelöste Zugriff auf das Datenelement in den Kommunikationssteuerungsdaten unter Zuhilfenahme einer den Zugriff auf ein Datenelement kennzeichnende Zugriffs-Kennung vermerkt wird, insbesondere indem eine neue Zugriffs-Kennung vergeben, oder eine bereits vergebene Zugriffs-Kennung geändert wird.

12. Datenkommunikationssystem (1) nach Anspruch 11, bei welchem dann, wenn zunächst vom ersten Client (3a) aus ein Zugriff auf das Datenelement ausgelöst wird, und daraufhin - nach der Freigabe des Datenelements nach der Sperr-Ablauf-Zeit - vom weiteren Client (3b) aus, der vom weiteren Client (3b) aus ausgelöste Zugriff in den Kommunikationssteuerungsdaten unter Zuhilfenahme der Zugriffs-Kennung vermerkt wird.

13. Datenkommunikationssystem (1) nach Anspruch 12, bei welchem der vom weiteren Client (3b) aus ausgelöste Zugriff dadurch in den Kommunikationssteuerungsdaten vermerkt wird, dass eine neue Zugriffs-Kennung vergeben, oder eine bereits vergebene Zugriffs-Kennung geändert wird.

14. Datenkommunikationssystem (1) nach Anspruch 13, bei welchem der Schreib-Zugriff nur durchgeführt wird, wenn die Zugriffs-Kennung identisch ist, wie die für den Lese-Zugriff vergebene, oder die hierbei geänderte Zugriffs-Kennung.

15. Rechner-Vorrichtung (2, 3a, 3b), welche so ausgestaltet und eingerichtet ist, dass sie als zentrale Rechner-Einrichtung (2) oder als Client (3a, 3b) in einem Datenkommunikationssystem (1) nach einem der Ansprüche 1 bis 14 verwendbar ist, und die Ermittlung der Kommunikationssteuerungsdaten veranlaßt.

16. Datenkommunikationsverfahren, bei welchem von mehreren Clients (3a, 3b) aus auf eine Vielzahl von Datenelementen zugegriffen werden kann, welche auf einer einer zentralen Rechner-Einrichtung (2) zugeordneten Speichereinrichtung (5) gespeichert sind, wobei das Verfahren den Schritt aufweist:
- Bereitstellen von die Rechner-Zeit (T) oder die Client-Zeit betreffenden Daten durch eine Zeitdaten-Bereitstelleinrichtung (13),
**dadurch gekennzeichnet, dass** jedem Datenelement ein Datenfeld zugeordnet ist, in das auf Basis der die Rechner- oder Client-Zeit (T) betreffenden Daten ermittelte Kommunikationssteuerungsdaten eingetragen werden, die eine Sperr-Ablauf-Zeit (T_{ablauf}) angeben oder auf Basis derer eine Sperr-Ablauf-Zeit ermittelt werden kann, zu der nach einem von einem ersten Client (3a) aus ausgelösten Zugriff auf ein bestimmtes Datenelement dieses Datenelement für einen von einem weiteren Client (3b) aus ausgelösten Zugriff wieder freigegeben wird.
